Europäisches Patentamt

European Patent Office

Office européen des brevets

(19)

(11) Publication number: **0 361 730**

**A1**

(12) **EUROPEAN PATENT APPLICATION**

(21) Application number: **89309273.4**

(22) Date of filing: **13.09.89**

(51) Int. Cl.5: **F16D 43/20 , F16D 3/10 , B41F 13/00 , B41F 13/14**

(30) Priority: **29.09.88 GB 8822907**

(43) Date of publication of application:
 **04.04.90 Bulletin 90/14**

(84) Designated Contracting States:
 **AT BE CH DE ES FR GB GR IT LI LU NL SE**

(71) Applicant: **T I MATRIX ENGINEERING LIMITED**
**East Mill Road**
**Brechin Angus Scotland DD9 7EP(GB)**

(72) Inventor: **Baker, David Julian**
**60 Kinghorne Street**
**Arbroath Angus Scotland DD11 2LZ(GB)**
Inventor: **Clowes, Richard John**
**Bracebridge Tutts Clump Bradfield**
**Reading Berkshire RG7 6JU(GB)**

(74) Representative: **Ackroyd, Robert et al**
**Pollak, Mercer & Tench Eastcheap House**
**Central Approach**
**Letchworth Hertfordshire SG6 3DS(GB)**

(54) **Torque-limiting clutch.**

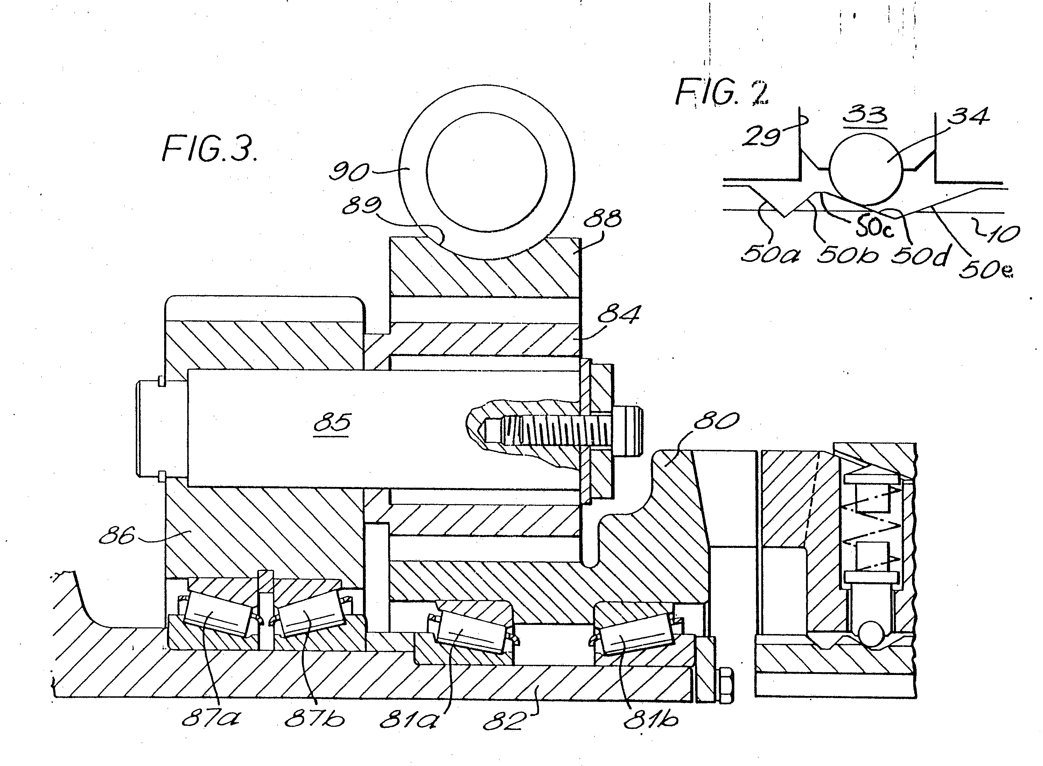

(57) The clutch comprises a driving part 12 and a driven part 20, engageable by respective sets of teeth 24, 26. The driving part is shiftable axially to engage or disengage the clutch by introduction of fluid pressure through ports 64, 66 into a chamber 62 at opposite sides of a piston 72. The clutch is held in its engaged condition by radially-extending springs 32 which act through rollers 34 on a camming surface 50 of a hub 10 of the clutch. The rollers 34 and camming surface 50 co-operate to define detent positions corresponding to engaged and disengaged conditions of the clutch. When engaged, the fluid pressure in the chamber 62 can be relieved, so that disengagement at the limiting torque takes place when the bias of the springs 32 acting on the camming surface is overcome. An epicyclic output stage of the clutch is shown in Figure 3. This allows selective adjustment of the output phase relative to the driving part.

FIG 1

# TORQUE-LIMITING CLUTCH

This invention relates to torque-limiting clutches which transmit rotational drive up to a limiting torque value, whereupon disengagement takes place. Such clutches find application in all types of industrial machinery, for example printing and paper-handling machinery used in the newspaper industry.

DE-A-554046 and US-A-1512760 describe clutches having toothed driving and driven parts which are shaped to disengage and separate in response to a predetermined maximum torque being transmitted from the driving to the driven parts. After disengagement and separation of the clutch parts, re-engagement is possibly only by re-setting of the clutch through an external agency.

The present invention seeks to provide a torque-limiting clutch which can find useful application in present-day industrial machinery, for example printing and paper-handling machinery.

The present invention provides a torque-limiting clutch comprising a driving part and a driven part, drive formations on the driving and driven parts shaped to engage for transmission of torque between the two parts and to disengage in response to a torque exceeding a limiting value, at least portions of the driving and driven parts being movable relative to each other between a first position in which the formations are in engagement and a second, disengaged position, control means for effecting relative movement of the driving and driven parts between their first and second positions, resilient biasing means urging the formations into engagement, and detent means for retaining the driving and driven parts in their first and second positions but allowing their movement from the first to the second position against the resilient bias in response to a driving torque exceeding the limiting value.

The formations on the clutch parts may be arranged so that the driving and driven parts are engageable at a plurality of different relative rotational positions thereof. Alternatively, the parts may be engageable at a single relative rotational position. In both cases, it is desirable to be able to adjust the rotational phase of the clutch output relative to the input, for example when carrying out a printing process consisting of a plurality of individual printing operations which must be in precise registration with one another. This can be attained by an epicyclic gear train drivably-connected to the driven part which is connected to a sun gear of the epicyclic train, the output of which is taken from its planet carrier, and the phase adjustment of the means comprise means for rotation of the ring gear of the epicyclic train. The means for rotation of the ring gear advantageously comprise a worm engaging the ring gear.

With such an arrangement, the phase adjustment can take place steplessly with fine control and minimal backlash. The adjustment can be by remote control. Moveover, the phase can be adjusted with the printing press or other equipment incorporating the clutch running at full operational speed. The advantages of continuous control and adjustment, for example under computer control, can thus be attained. Furthermore, phase changes of up to 360° and more can be provided for. These compares with limits of ± 15° in known equipment. When a full 360° and multiples are available, it becomes possible, for example, on a newsprint press to change the position of pages relative to one another by adjusting one print roll in its synchronised relationship to other rolls. In this way special editions may be created, for example by making room for an advertising supplement or late edition page. Space can be made for printed matter from an additional roll. If the clutch controlling engagement is a single position device, the process can be automated.

Preferably, the control means comprise an axially-movable actuator member which acts on the driving or driven member part, or a portion thereof, to effect relative movement of the parts between their first and second positions.

Conveniently, the driving or driven member comprises a first portion, having the said formations thereon, and a second portion, relative to which the first portion is axially movable between the first and second positions and with which the first portion is rotatably connected, the actuator member being mounted on the second portion for axial movement relative thereto to effect the axial movement of the first portion between the first and second positions.

Preferably, the control means comprise at least one chamber formed between the actuator member and the second portion of the driving or driven member, and means for control of fluid pressure in the chamber, in order to effect axial movement of the actuator. If so, the second portion advantageously comprises a portion which partitions the chamber into first and second subchambers, in which the fluid pressure can be controlled to effect the movement of the actuator. In many constructions, the fluid chamber will be annular and the partitioning portion comprise an annular flange extending around a hub member of the clutch. Advantageously, the partition portion is mounted on the said second portion on bearing means for rotation relative thereto.

Conveniently, the detent means comprise a resiliently biased detent member which is in engagement with a cam surface, the cam surface being shaped to define detent positions corresponding to the first and second relative positions of the driving and driven parts. Preferably, the resilient bias acting on the detent member is provided by the said resilient biasing means. It is also preferred that the resilient bias of the detent means should act transversely to the axis of relative movement of the driving and driven parts. Advantageously, the resilient biasing means comprise a plurality of radially-acting compression springs spaced circumferentially around the driving or driven part. This bias is preferably adjustable, to adjust the limiting torque value, the adjustment means conveniently comprises an adjustment element which is movable axially of the clutch, for example on screw threads, and which has inclined surfaces co-operating with correspondingly inclined surfaces on respective spring carriers on which the springs act.

It is desirable that the detent means should be arranged so that the driving and driven members move as little as possible from their engaged position to their position corresponding to the limiting torque value. Wind-up in a drivetrain incorporating the clutch is thus minimised and a clutch with high torsional stiffness obtained.

Clutches according to the present invention can be constructed with drive teeth of large area and splines of generous proportions, so as to ensure low working stresses and long service life.

An embodiment of the invention will now be described by way of example, with reference to the drawings of this specification, in which:

Figure 1 is a side view, partly in section, of a torque-limiting clutch,

Figure 2 is a view on an enlarged scale of part of the clutch of Figure 1, and

Figure 3 is a side view in section of one-half of an epicyclic output stage for the clutch of Figure 1.

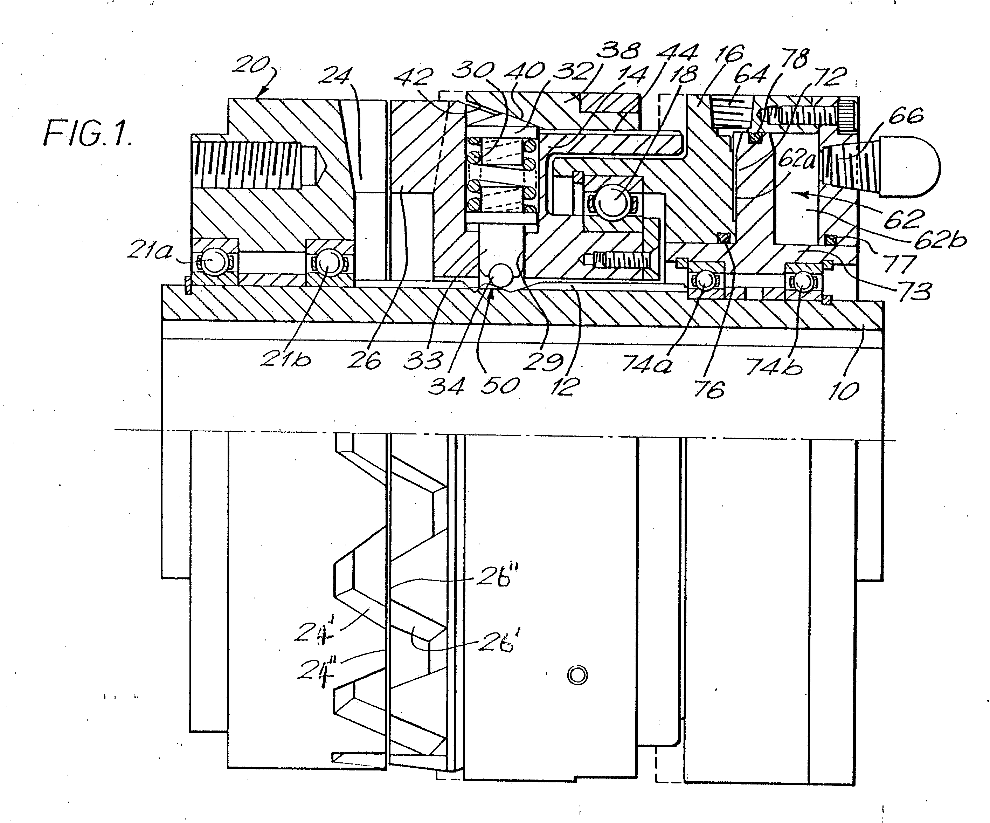

The clutch shown in Figure 1 has a driving part consisting of a central sleeve-like hub 10 and a driving member 14 which is mounted on the hub 10 on splines 12. An actuator member 16 acts on the driving member 14 through thrust bearing 18. A driven member 20 of the clutch is supported on the sleeve 10 by a pair of ball bearings 21a, 21b.

The driven member 20 has a set of teeth 24 with inclined flank faces 24′ and substantially flat end faces 24″. The adjacent flank faces 24′ of adjacent teeth lie at about 75° to each other. The driving member 14 has a complementarily-shaped set of teeth 26, which also have flank faces 26′ lying at about 75° to those of their neighbours and substantially flat end faces 26″. The teeth 26, 24 of the driving and driven members 14, 20 are shaped so that they can engage at as many relative rotational positions of the two members as there are teeth on each. Alternatively, the teeth could be shaped and arranged so that the number of relative rotational positions in which the driving and driven members can engage is a number less than the number of teeth, down to the possibility of engagement at only a single relative rotational position of the driving and driven members.

The driving member 14 has eight equally-spaced radial bores 29, each extending from the outer periphery of the driving member 14 to its inner surface adjacent to the hub 10. In each bore 29 a helical compression spring 30 is located. At its outer end, each spring presses against a spring carrier 32. The inner end of each spring 30 is in contact with a cam follower 33 which carries at its end adjacent the hub 10 a roller 34 which, in an alternative arrangement, could instead be a ball. The outer surfaces of the spring carriers 32 have ramp surfaces 40 which are urged by the springs 30 into sliding contact with corresponding ramp surfaces 42 on an adjusting ring 38 which is rotatably movable back and forth on the driving member 14 on a screw thread 44.

The springs urge the rollers 34 of the cam followers 33 into contact with a camming surface 50 on the outer surface of the hub 10. The camming surface 50 is shown in more detail in Figure 2 of the drawings. This shows the inner end of one of the bores 29, together with the cam follower 33 and roller 34 of that bore. The camming surface 50 is annular and extends around the periphery of the hub 10 and, starting from the front end of the surface, has five surface portions 50a, 50b, 50c, 50d and 50e.

The surface portions 50a, 50b form a V-section groove which extends around the hub 10. The surface portions 50d, 50e likewise form a further V-section groove. Between the two grooves, the surface portion 50c is substantially parallel to the axis of the clutch. In the engaged condition of the clutch, the rollers 34 are positioned on the camming surface portion 50b, as close as possible to the surface portion 50c. In the disengaged condition, the rollers 34 are positioned on the camming surface portion 50d, as shown in Figure 1.

Positioning of the rollers 34 on the camming surface portion 50b as close as possible to the peak in the surface 50 constituted by the portion 50c ensures that axial movement of the clutch parts relative to each other in response to increases in torque to less than the limiting value is minimised. The partial separation and relative rotation of the driving and driver members 14, 20, which occurs during such torque increases is accordingly minimised. The torsional stiffness of the clutch is thus increased, as is desirable in printing and other applications.

It should be noted that the camming surface portions 50a, 50e are not functional when the clutch is operational. They are however used during assembly of the clutch to give appropriate setting positions.

Returning now to Figure 1, it will be seen that the actuator member 16 contains an annular chamber 62 which has a first port 64 and a second port 66. The chamber 62 encloses a piston which is in the form of an outwardly-extending annular flange 72 of a cylindrical sleeve 73 which is rotatably mounted by way of a pair of ball bearings 74a, 74b on the hub 10 adjacent to its rearward end.

O-ring seals 76, 77 located in respective grooves in the actuator 16 seal the ends of the chamber 62. A further O-ring seal 78 is located in a groove at the outer edge of the flange 72 and forms a fluid-tight seal dividing the cylinder 62 into its front and rear parts 62a, 62b, the first port 64 of the cylinder being in communication with the front cylinder part 62a and the second port 66 being in communication with the rear part 62b. The ports 64, 66 are connected to suitable sources of hydraulic or pneumatic pressure.

Figure 3 of the drawings shows an epicyclic output gear train which can optionally be incorporated as part of the driven part of the torque-limiting clutch shown in Figures 1 and 2. The epicyclic gear train comprises a sun gear 80 which is formed integrally with the clutch driven part and is supported on roller bearings 81a, 81b for rotation relative to a sleeve-like hub 82. The sun gear 80 is in meshing engagement with three planet gears 84, each of which is rotatably mounted on a respective axle 85. An output gear 86 of the epicyclic gear train is mounted on the hub 82 in front of the sun gear 80 and is driven by the planet gears 84 by way of the three axles 85 which extend into bores in the output gear 86. The planet gears 84 are also in engagement with a ring gear 88 formed at its outer periphery 89 as a worm wheel and is in engagement with a worm 90.

The rotational speed of the output gear 86 in this embodiment is one-third that of the clutch driven part. By rotation of the worm 90, the ring gear can be rotated relative to the planet gears and the phase relationship between the output of the epicyclic gear train and the driven part of the torque-limiting clutch thereby altered. It should be noted that phase changes of a full 360° and multiples thereof are available with this construction. This is particularly advantageous in clutch constructions in which the teeth are arranged to allow engagement of the clutch parts at relatively few relative rotational positions of the parts.

The operation of the torque-limiting clutch will now be described. It will first of all be assumed that the clutch is in the condition shown in Figure 1 and that it is desired to effect engagement of its driving and driven members 14, 20. To do this, hydraulic or pneumatic pressure is supplied through the first port 64 into the front part 62a of the cylinder 62, whilst the rear part 62b is unpressurised. As a result, the actuator 16 is caused to shift axially to the left (as seen in Figure 1). Axial thrust is thus transmitted by the thrust bearing 18 to the driving member 14 which accordingly shifts to the left (as seen in Figure 1) and, as a result, the teeth 26, 24 of the driving and driven members 14, 20 come into meshing engagement with one another. In this position, the driven member 20 of the clutch is coupled to the driving member 14 and the hub 10 by the teeth 24, 26, for rotational motion therewith. If, upon clutch-engaging movement of the driving member 14, the teeth 24, 26 come into a position in which their end faces 24″, 26″ are opposed to one another, the situation exists in which the axial thrust of the actuator 16 is divided into a part which compresses the springs 30 and a part which keeps the teeth end faces 24″, 26″ together. By suitable choice of the profile of the camming surface 50, the respective thrust proportions can be determined so that the drag between the driving and driven members 14, 20 is kept low. This avoids the need for any supplementary brake, such as is used with some clutches to prevent drag in the disengaged position.

It should be noted that, during the engaging movement of the clutch, the rollers 34 move from their positions shown in Figures 1 and 2 of the drawings, where they are in contact with the inclined portion 50d of the camming surface 50, over the peak constituted by the portion 50c and into positions in which they are in contact with the surface portion 50b close to its join with the portion 50c. This engaging movement is resisted by the compression springs 30 which are further compressed during the movement so that they allow the rollers 34 to ride over the peak in the camming surface The driving member 12 is then retained in the engagement position. It should be noted that, during this movement of the driving member 14 from its disengaged to its engaged position, the axial thrust produced by the rollers 34 on the camming surface 50 is reacted by the bearings 74a, 74b.

In the engaged condition, the torque-limiting clutch will transmit torque from the driving member 14 to the driven member up to a limiting value which is determined by the compressive force of the springs 30. This spring force can be adjusted by adjustment of the adjusting ring 38 which, when moved to the right (as seen in Figure 1) on its screw threads allows, by engagement of its ramp surfaces 40 with the ramp surfaces 42 of the spring carriers 32, the compressive force of the springs 30 to be relieved, the force retaining the driving member 14 in its engaged position thereby diminished and the limiting torque value reduced. When the clutch is in its engaged position, the hydraulic or pneumatic pressure in the front cylinder part 62a can be relieved since the clutch is maintained engaged by the compression springs 30. It should however be noted that if, during operation, it is desired temporarily to increase the limiting torque value, this can be attained by the temporary introduction of pressurised fluid into the front part 62a of the cylinder 62. Similarly, a reduced limiting value can be attained by introduction of fluid pressure into the rear part 62b of the cylinder 62. Each of these operations can be carried out remotely with the clutch in use.

If, during use of the clutch, the torque being transmitted rises to the limiting value, the flanks 24′, 26′ of the teeth 24, 26 will cooperate so that the teeth of one part ride up over those of the other and thus produce rearward movement of the driving member 14 relative to the driven member 20 and the hub 10. This movement takes place against the engaging force of the springs 30 and, during it, the rollers 34 ride up to the peak of the portion 50b of the camming surface 50, into contact with the surface portion 50c and thence into contact with the portion 50d of the surface 50. In this latter position of the rollers 34, the clutch is disengaged, and is held in its disengaged position by engagement of the rollers 34 on the camming surface portion 50d. It should again be noted that the axial thrust produced by the rollers 34 on the camming surface 50 during disengagement of the clutch upon overload is reacted by the bearings 74a, 74b.

When it is desired to disengage the clutch other than upon overload, hydraulic or pneumatic pressure is introduced through the second port 66 into the rear part 62b of the chamber 62. Movement of the actuator 16 to the right (as seen in Figure 1) ensues and disengagement takes place. After disengagement, the rollers 34 are in contact with the camming surface portion 50d. The pressure in the chamber part 62b can then be relieved. During disengagement, the bearings 74a, 74b react the axial thrust produced by the springs 30 acting on the camming surface 50. When the clutch is disengaged, re-engagement is possible only by re-introduction of fluid pressure into the front part 62a of the chamber 62. The possibility of inadvertent re-engagement is thereby very low.

In a modified version of the clutch described, the biasing force of the springs 30, and thereby the limiting torque value, can be adjusted remotely by a suitable servo system arranged to rotate the adjusting ring 38. In both the modified and the unmodified clutches, the limiting torque value can be adjusted with the clutch installed on a machine and when the machine is fully operational.

In a further modification, position sensors are incorporated into the clutch in order to indicate at a remote location whether or not the clutch is engaged and/or when disengagement is taking place.

## Claims

1. A torque-limiting clutch comprising a driving part and a driven part, drive formations on the driving and driven parts shaped to engage for transmission of torque between the two parts and to disengage in response to a torque exceeding a limiting value, at least portions of the driving and driven parts being movable relative to each other between a first position in which the formations are in engagement and a second, disengaged position, control means for effecting relative movement of the driving and driven parts between their first and second positions, resilient biasing means urging the formations into engagement, and detent means for retaining the driving and driven parts in their first and second positions but allowing their movement from the first to the second position against the resilient bias in response to a driving torque exceeding the limiting value.

2. A clutch according to claim 1, in which the driving and driven parts are engageable at a plurality of different relative rotational positions thereof.

3. A clutch according to claim 1, in which the driving and driven parts are engageable at a single relative rotational position thereof.

4. A clutch according to any preceding claim, in which the driving and driven parts are rotatable about a common axis, along which they are movable between their first and second positions.

5. A clutch according to claim 4, in which the engageable formations comprise respective circumferential sets of teeth on the driving and driven parts, the teeth sets being concentric with the rotational axis of the clutch.

6. A clutch according to claim 5, in which the control means comprise an axially-movable actuator member which acts on the driving or driven parts, or a portion thereof, to effect relative movement of the parts between their first and second positions.

7. A clutch according to claim 6, in which the driving or driven part comprises a first portion, having the said formations thereon, and a second portion, relative to which the first portion is axially-movable between the first and second positions and with which the first portion is rotatably-connected, the actuator member being mounted on the second portion for axial movement relative thereto to effect the axial movement of the first portion between the first and second positions.

8. A clutch according to claim 7, in which the control means comprise at least one chamber formed between the actuator member and the second portion of the driving or driven part, and means for control of fluid pressure in the chamber, in order to effect axial movement of the actuator.

9. A clutch according to claim 8, in which the said second portion comprises a portion which partitions the chamber into first and second subchambers, in which the fluid pressure can be controlled to effect the movement of the actuator.

10. A clutch according to claim 9, in which the said second portion comprises a hub member of the clutch, the fluid chamber is annular and the partitioning portion comprises an annular flange extending around the hub member.

11. A clutch according to claim 9 or 10, in which the partition portion is mounted on the said second portion on bearing means for rotation relative thereto.

12. A clutch according to any preceding claim, in which the detent means comprise a resiliently-biased detent member which is in engagement with a cam surface, the cam surface being shaped to define detent positions corresponding to the first and second relative positions of the driving and driven parts.

13. A clutch according to claim 12, in which the resilient bias acting on the detent member is provided by the said resilient biasing means.

14. A clutch according to claim 12 or 13, in which the resilient bias of the detent means acts transversely to the axis of relative movement of the driving and driven parts.

15. A clutch according to claim 14, in which the resilient biasing means comprise a plurality of radially -acting compression springs spaced circumferentially around the driving or driven part.

16. A clutch according to claim 15, in which the bias of the compression springs is adjustable by adjustment means to adjust the limiting torque of the clutch.

17. A clutch according to claim 16, in which the adjustment means comprises an adjustment element which is movable axially of the clutch and which has an inclined surface co-operating with correspondingly inclined surfaces on respective spring carriers on which the springs act.

18. A clutch according to claim 17, in which the adjustment element is a collar in screw threaded engagement with a portion of the clutch.

19. A clutch according to any preceding claim, having means for selective adjustment of the rotational phase of the output relative to the input.

20. A clutch according to claim 19, in which the phase-adjustment means comprise an epicyclic gear train drivably-connected to the driven part which is connected to a sun gear of the epicyclic train, the output of which is taken from its planet carrier, and the phase adjustment of the means comprise means for rotation of the ring gear of the epicyclic train.

21. A clutch according to claim 20, in which the means of rotation of the ring gear comprise a worm in engagement with the ring gear.

22. A clutch according to any preceding claim, in which the control means are operable to override the resilient biasing means and thereby hold the clutch in its engaged or disengaged condition.

FIG.1.

20 24 42 30 40 32 38 44 16 78
14 18 64 72
66

21a

62a
62
62b
77
73

21b 26 33 34 50 29 12 74a 76 74b 10

26"

24'
24"
26'

EP 0 361 730 A1

FIG. 2

FIG. 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X,A | DE-C-554046 (GESELLSHAFT FUR ELEKTRISCHE APPARATE) <br> * the whole document * | 1-5, 12-16 | F16D43/20 <br> F16D3/10 <br> B41F13/00 <br> B41F13/14 |
| Y | | 6-11, 19-21 | |
| X,A | US-A-1512760 (HANCOCK) <br> * page 2, line 129 - page 3, column 40; figure 2 * | 1-5, 12-16 | |
| Y | | 6-11, 19-21 | |
| Y | DE-B-1230627 (FA. FRIEDRICH KOCKS) <br> * column 4, line 1 - column 6, line 16; figure 1 * | 6-11 | |
| Y | FR-A-2247641 (MASCHINENFABRIKWEINGARTEN AG.) <br> * page 5; figures 1, 2 * | 19-21 | |
| Y | EP-A-143368 (MAN TECHNOLOGIE GMBH.) <br> * page 3, line 26 - page 4, line 15; figures 1, 2 * | 19-21 | TECHNICAL FIELDS SEARCHED (Int. Cl.5 ) |
| X | US-A-3938634 (FROST) <br> * column 7, line 15 - column 10, line 16; figures 1-3 * | 1-3, 12-14 | F16D <br> B41F |
| A | | 5-10 | |

The present search report has been drawn up for all claims

| Place of search | Date of completion of the search | Examiner |
|---|---|---|
| THE HAGUE | 08 NOVEMBER 1989 | DIAZ-MAROTO V. |